# EUROPEAN PATENT APPLICATION

(11) **EP 4 796 991 A1**
(43) Date of publication of application: **26.08.2026**
(21) Application number: 23956885.0
(22) Date of filing: 26.10.2023
(51) Int. Cl.: G02F 1/13357, G02F 1/1333

(54) **DISPLAY DEVICE**

(71) Applicant: LG Electronics Inc., Yeongdeungpo-gu Seoul 07336 (KR)
(72) Inventor: CHOI, Jeongwoo, Seoul 06772 (KR)
(74) Representative: Schott, Jakob Valentin
(86) International application number: PCT/KR2023/016691
(87) International publication number: WO 2025/089450

(57) **Abstract**

A display device is disclosed. The display device of the present disclosure may comprise: a display panel; a frame positioned at the rear of the display panel; a substrate positioned on the front surface of the frame; light sources mounted on the front surface of the substrate; and a holder for coupling the substrate to the frame, wherein the holder includes: a head positioned on the front surface of the substrate; a leg protruding from the rear surface of the head and passing through the substrate and the frame; and a protrusion which protrudes from the side surface of the leg and which is in contact with the rear surface of the frame.

## Description

### TECHNICAL FIELD

The present disclosure relates to a display device.

### BACKGROUND ART

As the information society develops, the demand for display devices is increasing in various forms. In response to this, recently, various display devices such as Liquid Crystal Display Device (LCD), Plasma Display Panel (PDP), Electro luminescent Display (ELD), and Vacuum Fluorescent Display (VFD) have been researched and used.

Among these, a LCD panel includes a TFT substrate and a color filter substrate opposite to each other with a liquid crystal layer interposed therebetween, and may display an image by using light provided from a backlight unit.

A substrate of a conventional backlight unit is attached to a frame by using a double-sided tape or fixed to the substrate through a hook of the frame. However, there is a risk of damage to the substrate during the process of separating the substrate attached to the frame with a double-sided tape from the frame. In addition, there is a problem of dust ingress into the substrate through a gap between the hook of the frame and the substrate.

### DETAILED DESCRIPTION OF INVENTION

### TECHNICAL PROBLEMS

An object of the present disclosure is to solve the aforementioned problems and other problems.

Another object may be to provide a structure for coupling a substrate to a frame.

Another object may be to provide a structure that minimizes damage to a substrate during a process of separating the substrate from a frame.

Another object may be to provide a structure that not only firmly couples a substrate to a frame but also minimizes dust ingress into the substrate.

Another object may be to provide a structure in which a holder for coupling a substrate to a frame also serves the function of supporting a diffusion plate.

Another object may be to provide a structure in which a holder for coupling a substrate to a frame also serves the function of insulating a board mounted on the frame.

Another object may be to provide various examples of a holder.

### TECHNICAL SOLUTION

According to an aspect of the present disclosure for achieving the above or other objects, a display device may include: a display panel; a frame positioned at a rear of the display panel; a substrate positioned on a front surface of the frame; light sources mounted on a front surface of the substrate; and a holder coupling the substrate to the frame, wherein the holder may include: a head positioned on the front surface of the substrate; a leg which protrudes from a rear surface of the head, and which passes through the substrate and the frame; and a protrusion which protrudes from a side surface of the leg, and which is in contact with a rear surface of the frame.

### EFFECT OF INVENTION

The effects of the display device according to the present disclosure are described as follows.

According to at least one of the embodiments of the present disclosure, there may be provided a structure for coupling a substrate to a frame.

According to at least one of the embodiments of the present disclosure, there may be provided a structure that minimizes damage to a substrate during a process of separating the substrate from a frame.

According to at least one of the embodiments of the present disclosure, there may be provided a structure that not only firmly couples a substrate to a frame but also minimizes dust ingress into the substrate.

According to at least one of the embodiments of the present disclosure, there may be provided a structure in which a holder for coupling a substrate to a frame also serves the function of supporting a diffusion plate.

According to at least one of the embodiments of the present disclosure, there may be provided a structure in which a holder for coupling a substrate to a frame also serves the function of insulating a board mounted on the frame.

According to at least one of the embodiments of the present disclosure, there may be provided various examples of a holder.

Further scope of the applicability of the present disclosure will become apparent from the following detailed description. However, since various changes and modifications within the spirit and scope of the present disclosure are clearly understood by those skilled in the art, specific embodiments such as the detailed description and preferred embodiments of the present disclosure should be understood as being given merely as examples.

### BRIEF DESCRIPTION OF THE DRAWING

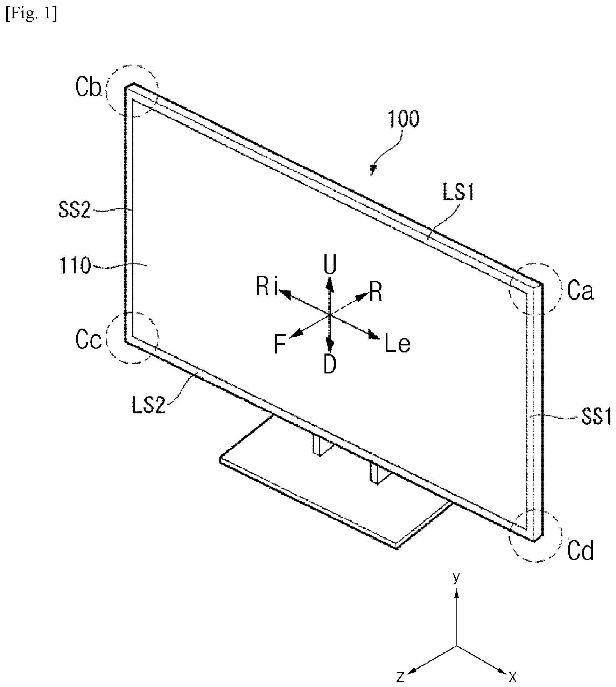

FIGS. 1 to 15 are drawings illustrating examples of a display device according to embodiments of the present disclosure.

### MODE FOR CARRYING OUT THE INVENTION

In the following description, the same or similar components are assigned the same reference numbers, and overlapping descriptions with respect to the same reference numbers may be omitted.

In the following description, suffixes such as "module" and "unit" may be used to refer to elements or components. Use of such suffixes herein is merely intended to facilitate description of the specification, and the suffixes do not have any special meaning or function.

In the following description, when it is determined that a detailed description of a well-known technology may obscure the gist of an embodiment of the present disclosure, a detailed description of the well-known technology may be omitted. In the following description, the accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

Terms such as first and second used in the following description may be used. These terms are only for distinguishing the elements from other elements, and the essence, sequence, or order of the elements are not limited by the terms.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

The direction indications of up U, down D, left Le, right Ri, front F, and rear R shown in the drawings are only for the convenience of explanation, and the technical concepts disclosed in this specification are not limited thereby.

Referring to FIG. 1, a display device 100 may include a display panel 110. The display panel 110 may display an image.

The display 100 may include a first long side LS1, a second long side LS2 opposite to the first long side LS1, a first short side SS1 adjacent to the first long side LS1 and the second long side LS2, and a second short side SS2 opposite to the first short side SS1. Meanwhile, for convenience of explanation, it is illustrated that the lengths of the first and second long sides LS1 and LS2 are longer than the lengths of the first and second short sides SS1 and SS2, but it may be possible that the lengths of the first and second long sides LS1 and LS2 are approximately the same as the lengths of the first and second short sides SS1 and SS2.

The direction parallel to the long sides LS1, LS2 of the display device 100 may be referred to as a left-right direction. The direction parallel to the short sides SS1, SS2 of the display device 100 may be referred to as an up-down direction. The direction perpendicular to the long sides LS1, LS2 and short sides SS1, SS2 of the display device 100 may be referred to as a front-rear direction.

The direction in which the display panel 110 displays an image may be referred to as a front (F, z), and the opposite direction may be referred to as a rear R. The first long side LS1 may be referred to as an upper side (U, y), and the second long side LS2 may be referred to as a lower side D. The first short side SS1 may be referred to as a left (Le, x), and the second short side SS2 may be referred to as a right Ri.

The first long side LS1, the second long side LS2, the first short side SS1, and the second short side SS2 may be referred to as an edge of the display device 100. A point where the first long side LS1, the second long side LS2, the first short side SS1, and the second short side SS2 meet each other may be referred to as a corner.

A point where the first short side SS1 and the first long side LS1 meet may be referred to as a first corner Ca. A point where the first long side LS1 and the second short side SS2 meet may be referred to as a second corner Cb. A point where the second short side SS2 and the second long side LS2 meet may be referred to as a third corner Cc. A point where the second long side LS2 and the first short side SS1 meet may be referred to as a fourth corner Cd.

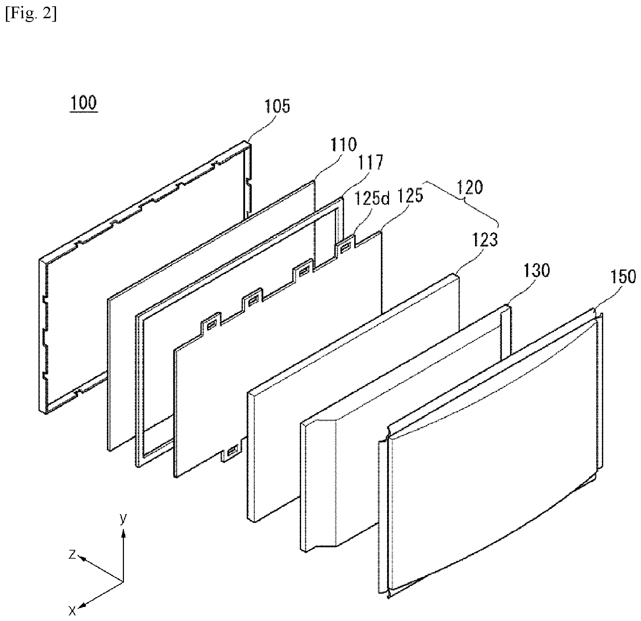

Referring to FIG. 2, the display device 100 may include a display panel 110, a front cover 105, a guide panel 117, a backlight unit 120, a frame 130, and a back cover 150.

The display panel 110 may form the front surface of the display device 100 and may display an image. The display panel 110 may display an image by having multiple pixels that output Red, Green, or Blue (RGB) for each pixel in synchronization with the timing. The display panel 110 may be divided into an active area where an image is displayed and a de-active area where an image is not displayed. The display panel 110 may include a front substrate and a rear substrate that are opposite to each other with a liquid crystal layer interposed there-between. The display panel 110 may be referred to as an LCD panel.

The front substrate may include multiple pixels composed of red, green, and blue subpixels. The front substrate may output light corresponding to the color of red, green, or blue according to a control signal.

The rear substrate may include switching elements. The rear substrate may switch a pixel electrode. For example, the pixel electrode may change the molecular arrangement of a liquid crystal layer according to a control signal input from the outside. The liquid crystal layer may contain liquid crystal molecules. The arrangement of the liquid crystal molecules may change in response to the voltage difference generated between the pixel electrode and a common electrode. The liquid crystal layer may transmit light provided from the backlight unit 120 to the front substrate or block it.

The front cover 105 may cover at least partial area of the front and side surfaces of the display panel 110. The front cover 105 may be divided into a front cover positioned on the front surface of the display panel 110 and a side cover positioned on the side surface. At least one of the front cover and the side cover may be omitted.

The guide panel 117 may surround the perimeter of the display panel 110, and cover the side surface of the display panel 110. The guide panel 117 may be coupled with the display panel 110 or support the display panel 110.

A backlight unit 120 may be positioned at the rear of a display panel 110. The backlight unit 120 may include light sources. The backlight unit 120 may be coupled to the frame 130 at the front of the frame 130. The backlight unit 120 may be driven in a full driving method or in a partial driving mode such as local dimming and impulsive. The backlight unit 120 may include an optical sheet 40 and an optical layer 123.

An optical sheet 125 may evenly transmit light from a light source to the display panel 110. The optical sheet 125 may be composed of multiple layers. For example, the optical sheet 125 may include a prism sheet or a diffusion sheet. For example, the optical sheet 125 may be a Double Brightness Enhance Film (DBEF). Meanwhile, a coupling portion 125d of the optical sheet 125 may be coupled to the front cover 105, the frame 130, or the back cover 150.

The frame 130 may be positioned at the rear of the backlight unit 120, and may support the components of the display device 100. For example, a component such as the backlight unit 120 and a Printed Circuit Board (PCB) on which a plurality of electronic elements are positioned may be coupled to the frame 130. The frame 130 may be referred to as a cover bottom 130.

The back cover 150 may cover the rear of the frame 130. The back cover 150 may be coupled to the frame 130 and/or the front cover 105. The back cover 150 may be omitted, and in this case, the frame 130 may form the rear surface of the display device 100.

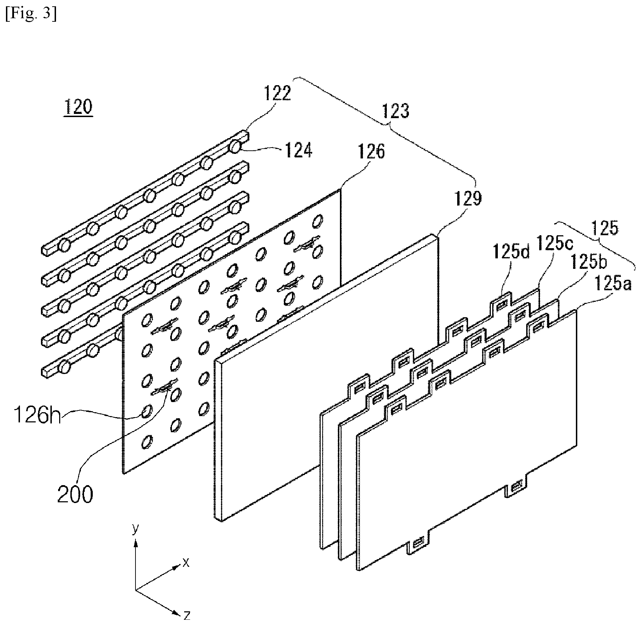

Referring to FIG. 3, the backlight unit 120 may include an optical layer 123 and an optical sheet 125. The optical layer 123 may include a substrate 122, at least one optical assembly 124, a reflective sheet 126, and a diffusion plate 129.

The substrate 122 may be coupled to the front surface of the frame 130. The substrate 122 may have a plate shape, or be composed of multiple bars spaced apart from each other. Alternatively, the substrate 122 may have a fork shape having a first plate that extends long and a plurality of second plates that intersect with the first plate. The substrate 122 may be composed of at least one of polyethylene terephthalate PET, glass, polycarbonate (PC), and silicon. The substrate 122 may be a Printed Circuit Board (PCB).

At least one optical assembly 124 may be mounted on the substrate 122. A plurality of optical assemblies 124 may be spaced apart from each other on the substrate 122. An electrode pattern for connecting an adapter and the optical assembly 124 may be formed on the substrate 122. For example, a carbon nanotube electrode pattern for connecting the optical assembly 124 and the adapter may be formed on the substrate 122.

For example, the optical assembly 124 may be a light-emitting diode LED chip or a light-emitting diode package including at least one light-emitting diode chip. The light source of the optical assembly 124 may be composed of a colored LED that emits at least one color among colors such as red, green, and blue, or composed of a white LED. The colored LED may include at least one of a red LED, a green LED, and a blue LED.

The reflective sheet 126 may be positioned in front of the substrate 122. The reflective sheet 126 may have a hole 126h in which the optical assembly 124 is positioned. The reflective sheet 126 may include at least one of a metal that is a reflective material and a metal oxide. For example, the reflective sheet 126 may include a metal and/or a metal oxide having a high reflectivity, such as at least one of aluminum Al, silver Ag, gold Au, and titanium dioxide TiO2. The reflective sheet 126 may reflect light from the optical assembly 124 or light reflected from the diffusion plate 129 forward.

The diffusion plate 129 may be positioned in front of a reflective sheet 126. The diffusion plate 129 may diffuse light from the optical assembly 124. The supporter 200 may be positioned between the reflective sheet 126 and the diffusion plate 129, and may support the rear surface of the diffusion plate 129. An air gap may be formed between the reflective sheet 126 and the diffusion plate 129, and the light from the optical assembly 124 may be spread widely by the air gap. The diffusion plate 129 may be referred to as an optical plate 129.

The optical sheet 125 may be positioned in front of the diffusion plate 129. The rear surface of the optical sheet 125 may be in close contact with the diffusion plate 129, and the front surface of the optical sheet 125 may be in close contact with or adjacent to the rear surface of the display panel 10. The optical sheet 125 may include at least one sheet.

For example, the optical sheet 125 may include a plurality of sheets having different functions. A first optical sheet 125a may be a diffusion sheet, and a second optical sheet 125b and a third optical sheet 125c may be a prism sheet. The prism sheet may concentrate light emitted from the diffusion plate 129, and provide it to the display panel 110. The diffusion sheet may prevent the light emitted from the diffusion plate 129 from being partially concentrated, thereby ensuring a more uniform light distribution. The number and/or position of the prism sheet and the diffusion sheet may be changed.

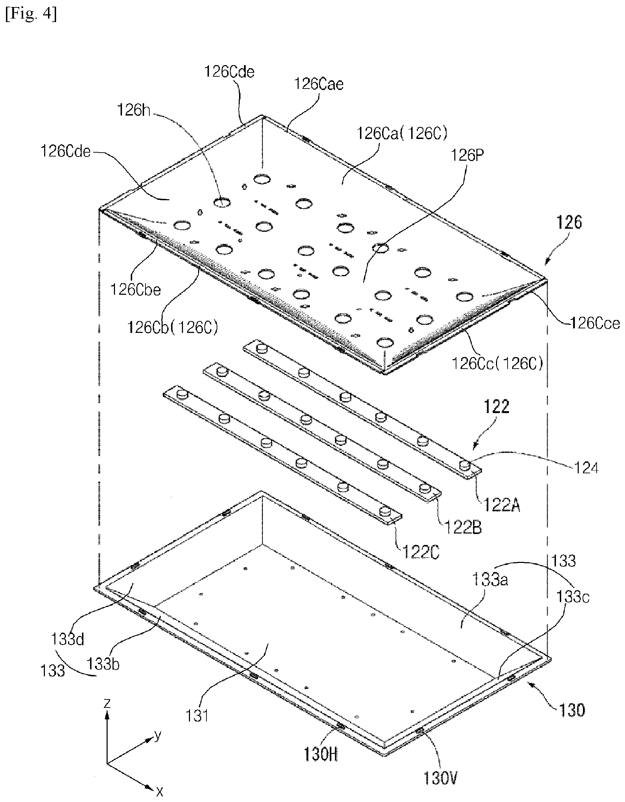

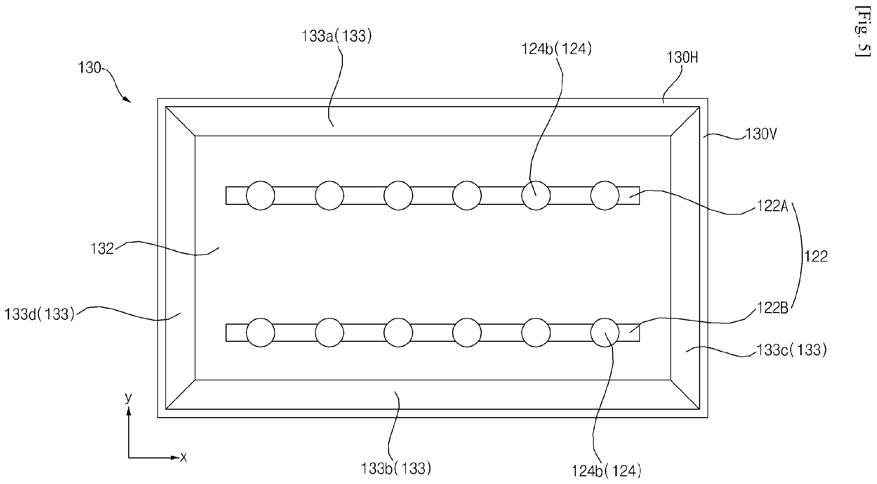

Referring to FIGS. 4 and 5, the substrate 122 may include a plurality of bars spaced apart from each other. For example, the substrate 122 may include three bars 122A, 122B, and 122C (see FIG. 4). For another example, the substrate 122 may include two bars 122A and 122B (see FIG. 5). For yet another example, the substrate 122 may include at least one plate-shaped substrate occupying an area corresponding to the frame 130 or at least one fork-shaped substrate occupying an area corresponding to the frame 130.

The frame 130 may have an overall square tray shape. The frame 130 may include a central portion 131, a side portion 133, and a seating portion 130H, 130V.

The central portion 131 may be a rectangular plate, and the substrate 122 may be coupled to the front surface of the central portion 131. The central portion 131 may be referred to as a base 131.

The side portion 133 may be extended forward at an angle from the edge of the central portion 131. The side portion 133 may be referred to as a chamfer portion 133. A first side portion 133a may be extended forward at an angle from the upper side of the central portion 131. The angle between the first side portion 133a and the front surface of the central portion 131 may be an obtuse angle. A second side portion 133b may be extended forward at an angle from the lower side of the central portion 131. The angle between the second side portion 133b and the front surface of the central portion 131 may be an obtuse angle. A third side portion 133c may be extended forward at an angle from the left side of the central portion 131. The angle between the third side portion 133c and the front surface of the central portion 131 may be an obtuse angle. A fourth side portion 133d may be extended forward at an angle from the right side of the central portion 131. The first to fourth side portions 133a, 133b, 133c, 133d may be connected to each other.

The seating portion 130H, 130V may be extended from the distal end of the side portion 133 in a direction parallel to the central portion 131. A vertical portion 130V may be extended in a vertical direction (i.e., up-down direction), and may form the left and right sides of the frame 130. A horizontal portion 130H may be extended in a horizontal direction (i.e., left-right direction), and may form the upper and lower sides of the frame 130.

The reflective sheet 126 may cover the substrate 122, and the optical assemblies 124 on the substrate 122 may be positioned in the holes 126h of the reflective sheet 126. The reflective sheet 126 may have a shape corresponding to the frame 130. The reflective sheet 126 may include a central portion 126P and a side portion 126C. The central portion 126P may have a rectangular sheet shape, and the side portion 126C may be bent forward at an angle from the edge of the central portion 126P. The central portion 126P may have a shape corresponding to the central portion 131, and the substrate 122 may be covered by the central portion 126P. The central portion 126P may be referred to as a base 126P, and the side portion 126C may be referred to as a chamfer portion 126C.

A first side portion 126Ca may be bent forward at an angle from the upper side of the central portion 126P. The first side portion 126Ca may face the first side portion 133a, and a portion 126Cae of the first side portion 126Ca may be bent so as to be seated on the horizontal portion 130H extending from the first side portion 133a. A second side portion 126Cb may be bent forward at an angle from the lower side of the central portion 126P. The second side portion 126Cb may face the second side portion 133b, and a portion 126Cbe of the second side portion 126Cb may be bent so as to be seated on the horizontal portion 130H extending from the second side portion 133b. A third side portion 126Cc may be bent forward at an angle from the left side of the central portion 126P. The third side portion 126Cc may face the third side portion 133c, and a portion 126Cce of the third side portion 126Cc may be bent so as to be seated on the vertical portion 130V extending from the third side portion 133c. A fourth side portion 126Cd may be bent forward at an angle from the right side of the central portion 126P. The fourth side portion 126Cd may face the fourth side portion 133d, and a portion 126Cde of the fourth side portion 126Cd may be bent so as to be seated on the vertical portion 130V extending from the fourth side portion 133d.

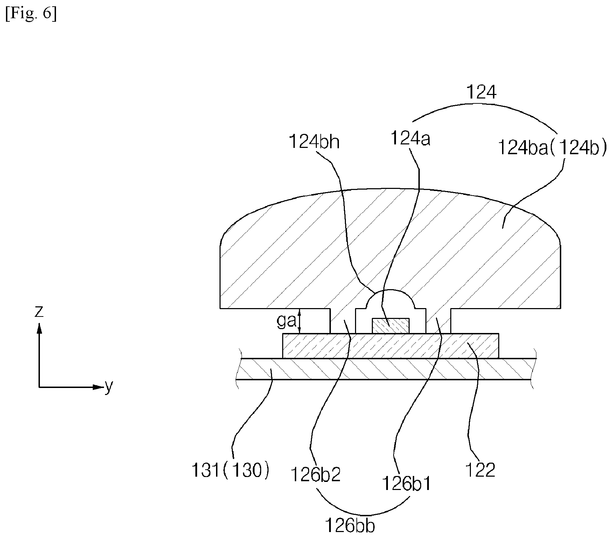

Referring to FIG. 6, the substrate 122 may be positioned on the front surface of the frame 130, and the optical assembly 124 may be positioned on the front surface of the substrate 122. The optical assembly 124 may include a light source 124a that provides light and a lens 124b that covers the light source 124a.

The light source 124a may be mounted on the front surface of the substrate 122. The light source 124a may be a light-emitting diode (LED) chip or a light-emitting diode package containing at least one light-emitting diode chip. The light source 124a may be composed of a colored LED that emits at least one color among colors such as red, green, blue, etc., or composed of a white LED.

The lens 124b may cover the light source 124a, and may be mounted on the front surface of the substrate 122. The lens 124b may include a body 124ba and legs 124bb. The body 124ba may have a dome or hemispherical shape, and the rear surface of the body 124ba may be spaced forward from the front surface of the substrate 122 (see gap ga in FIG. 6). A groove 124bh may be formed on the rear surface of the body 124ba, and the light source 124a may face the groove 124bh. The legs 124bb may protrude from the rear surface of the body 124ba toward the substrate 122, and may be coupled or attached to the front surface of the substrate 122. For example, a first leg 124b1, a second leg 124b2, a third leg (not shown), and a fourth leg (not shown) may be positioned at the vertices of a square. For example, two of the first to fourth legs may be inserted into or penetrate the substrate 122, and the remaining two legs may be coupled to or attached to the front surface of the substrate 122.

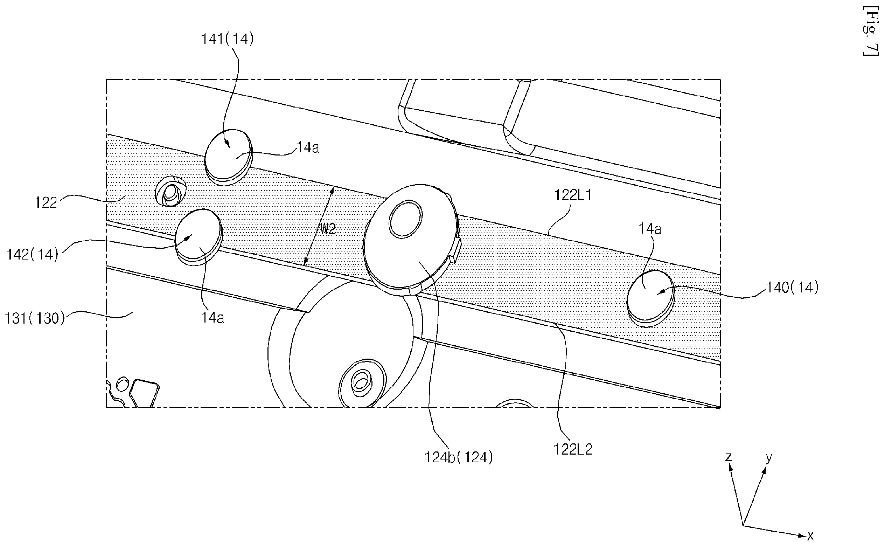

Referring to FIGS. 7 to 9, a holder 14 may include a head 14a, a leg 14b, and a protrusion 14c. The holder 14 may be referred to as a fixer 14 or a fixing pin 14. For example, the holder 14 may include a material such as rubber, silicone, or urethane. The holder 14 may have an overall screw shape.

The head 14a may form the front surface of the holder 14, and may be positioned on the front surface of the substrate 122. The head 14a may be flat. For example, the head 14a may have a circular or elliptical shape. As another example, the head 14a may have a polygonal shape such as a triangle or a square. As yet another example, the head 14a may have a ring shape. The head 14a may be referred to as a first part 14a.

The leg 14b may protrude rearward from the rear surface of the holder 14. The leg 14b may penetrate the substrate 122 and the frame 130. The leg 14b may have the shape of a cylinder or a prismatic column, and a hole 131h in the frame 130 through which the leg 14b passes may have the same shape as the cross-section of the leg 14b. The width Wb (e.g., diameter) of the leg 14b may be smaller than the width Wa (e.g., diameter) of the head 14a, thereby minimizing the size of the hole 131h. The leg 14b may be referred to as a second part 14b.

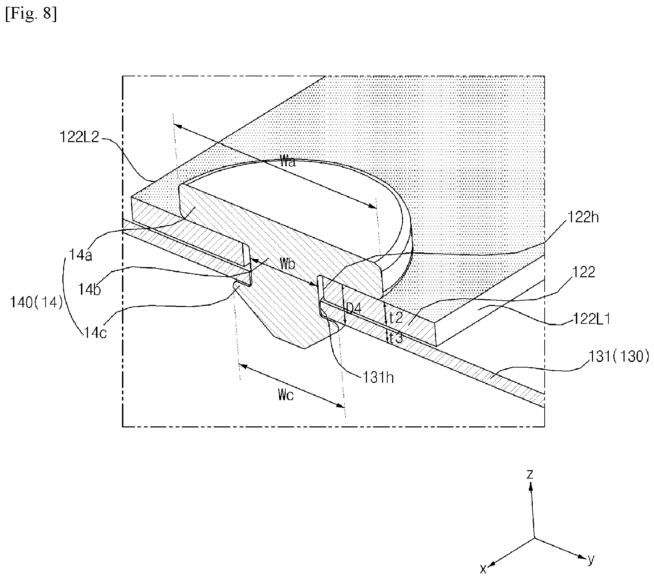

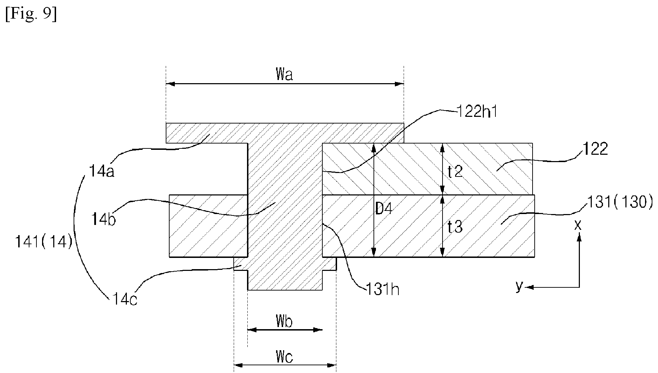

The protrusion 14c may protrude from the side surface of the leg 14b, and may extend along the side surface. The front surface of the protrusion 14c may face the rear surface of the frame 130. The protrusion 14c may be a flange of the leg 14b. The protrusion 14c may have a ring shape. The width Wc (e.g., diameter) of the protrusion 14c may be larger than the width (e.g., diameter) of the hole 131h of the frame 130. The width Wc (e.g., diameter) of the protrusion 14c may be smaller than the width Wa (e.g., diameter) of the head 14a. For example, the width Wc of the protrusion 14c (see FIG. 8) may decrease as it progresses away from the frame 130, and the protrusion 14c may have a side surface inclined toward the frame 130. As another example, the width Wc of the protrusion 14c (see FIG. 9) may be constant, and the protrusion 14c may have a side surface perpendicular to the frame 130.

The holder 14 may include an inner holder 140 and a side holder 141, 142. The inner holder 140 may be referred to as a central holder 140 or a central through-type holder 140. The side holders 141, 142 may be referred to as an edge through-type holder 141, 142.

The head 14a of the inner holder 140 may be positioned on the central portion of the substrate 122, and the leg 14b and protrusion 14c of the inner holder 140 may penetrate the inner hole 122h of the substrate 122 and the hole 131h of the frame 130. The width Wb of the leg 12b may be equal to or smaller than the width of the inner hole 122h and the width of the hole 131h, and the width Wc of the protrusion 14c may be larger than the width of the inner hole 122h and the width of the hole 131h. The inner holder 140 may be elastic, and the protrusion 14c may pass through the inner hole 122h and the hole 131h while being compressed, and may be restored and engaged with the rear surface of the frame 130 after passing through the inner hole 122h and the hole 131h.

Accordingly, the inner holder 140 may couple the substrate 122 to the frame 130. The distance D4 between the head 14a and the protrusion 14c may be equal to or slightly greater than the sum of the thickness t2 of the substrate 122 and the thickness t3 of the frame 130. Thus, the inner holder 140 not only firmly connects the substrate 122 to the frame 130, but also minimizes the entry of foreign substances, such as dust, into the substrate 122 or the frame 130 through a space between the head 14a and the protrusion 14c.

The side holder 141, 142 may be positioned at the rim of the substrate 122. For example, the side holder 141, 142 may be positioned on one long side of the bar-type substrate 122, and the inner holder 140 may be positioned on the inside of the one long side.

The head 14a of a first side holder 141 may be positioned on the substrate 122 while being adjacent to the first long side 122L1 of the substrate 122, and the leg 14b and protrusion 14c of the first side holder 141 may penetrate a first side hole 122h1 of the substrate 122 and the hole 131h of the frame 130. The first side hole 122h1 may be a groove or notch formed from the first long side 122L1 into the inner side of the substrate 122, and may be formed along a portion of the side surface of the leg 14b. The width Wb of the leg 12b may be equal to or smaller than the width of the hole 131h, and the width Wc of the protrusion 14c may be larger than the width of the hole 131h. The first side holder 141 may be elastic, and the protrusion 14c may pass through the hole 131h while being compressed, and may be restored and engaged with the rear surface of the frame 130 after passing through the hole 131h.

A second side holder 142 may be opposite to the first side holder 141 with respect to the substrate 122. Just as the first side holder 141 is coupled to the frame 130 through the first side hole 122h1 formed on the first long side 122L1 of the substrate 122 and the hole 131h of the frame 130, the second side holder 142 may be coupled to the frame 130 through a second side hole formed on the second long side 122L2 of the substrate 122 and the hole 131h of the frame 130. In the width direction of the substrate 122, the second side holder 142 may be aligned with the first side holder 141, or disposed offset from the first side holder 141.

Accordingly, the side holders 141, 142 may couple the substrate 122 to the frame 130. The distance D4 between the head 14a and the protrusion 14c may be equal to or slightly greater than the sum of the thickness t2 of the substrate 122 and the thickness t3 of the frame 130. Thus, the side holders 141, 142 not only firmly connect the substrate 122 to the frame 130, but also minimize the entry of foreign substances, such as dust, into the substrate 122 or the frame 130 through a gap between the head 14a and the protrusion 14c.

The holder 14 may include an insulating material. Accordingly, the substrate 122 may be prevented from being electrically damaged by the holder 14. The holder 14 may include a material having an excellent corrosion resistance. Accordingly, the substrate 122 may be prevented from being corroded by the holder 14.

The head 14a of the holder 14 may be white. For example, the holder 14 may be formed of a white material, or may be printed or coated with a white material. Accordingly, light loss of the optical assembly 124 caused by the holder 14 may be minimized.

Meanwhile, a user may separate the holder 14 from the frame 130 and the substrate 122 by cutting the portion of the holder 14 between the rear surface of the frame 130 and the protrusion 14c. Alternatively, a user may separate the holder 14 from the frame 130 and the substrate 122 by pulling the head 14a of the holder 14 forward. Accordingly, damage to the substrate 122 may be minimized during the process of separating the holder 14 for replacement or repair of the substrate 122.

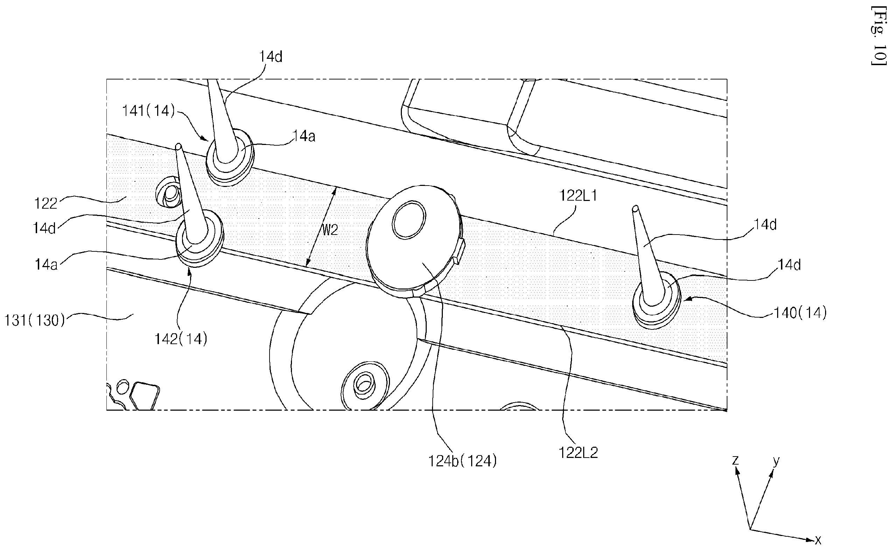

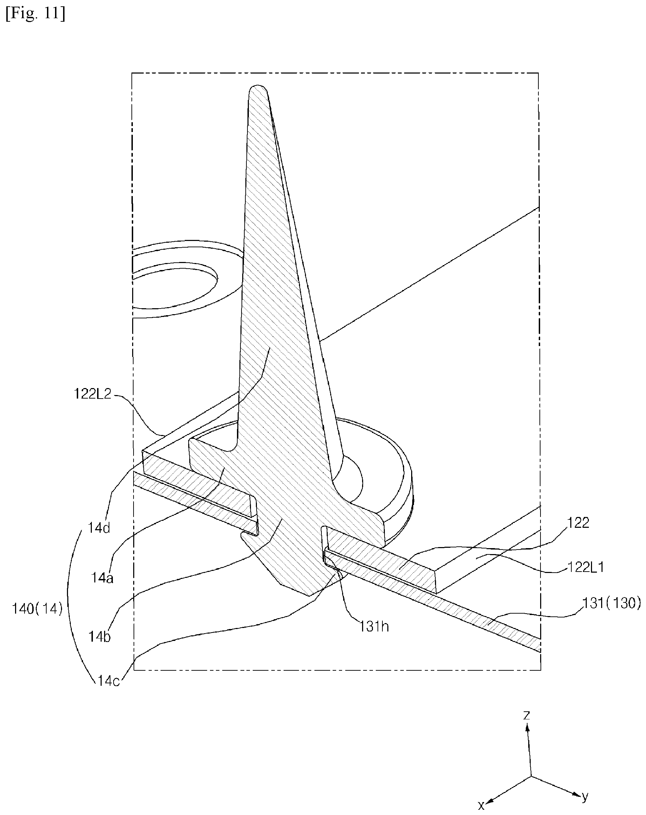

Referring to FIGS. 10 and 11, the holder 14 may further include a tower 14d. The tower 14d may protrude forward from the front surface of the head 14a. The height of the tower 14d may be greater than the height (or thickness) of other portion of the holder 14 excluding the tower 14d. The tower 14d may have a shape such as a cone, a cylinder, or a prismatic column. The width (e.g., diameter) of the tower 14d may be equal to or smaller than the width (e.g., diameter) of the head 14a. The tower 14d may be referred to as a supporter 14d or a fourth part 14d.

The front end of the tower 14d may be adjacent to the rear surface of the diffusion plate 129 (see FIG. 3). The tower 14d may support the diffusion plate 129. That is, the tower 14d may prevent the diffusion plate 129 from sagging rearward.

Meanwhile, at least some of a plurality of holders 14 may be equipped with a tower 14d. Alternatively, as described above with reference to FIGS. 7 to 9, the plurality of holders 14 may not be equipped with a tower 14d, and in this case, the supporter 200 (see FIG. 3) may support the diffusion plate 129.

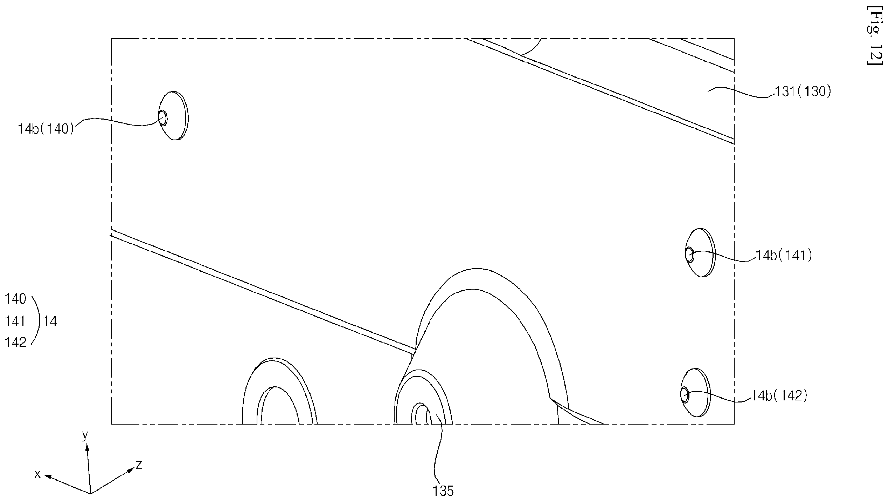

Referring to FIG. 12, a portion of the holder 14 may protrude rearward from the rear surface of the frame 130. The leg 14b of the holder 14 may form the rear end of the holder 14. A fixed portion 135 may be formed by being pressed from the front surface of the frame 130 to a rear, and may be spaced apart from the protrusion 14c.

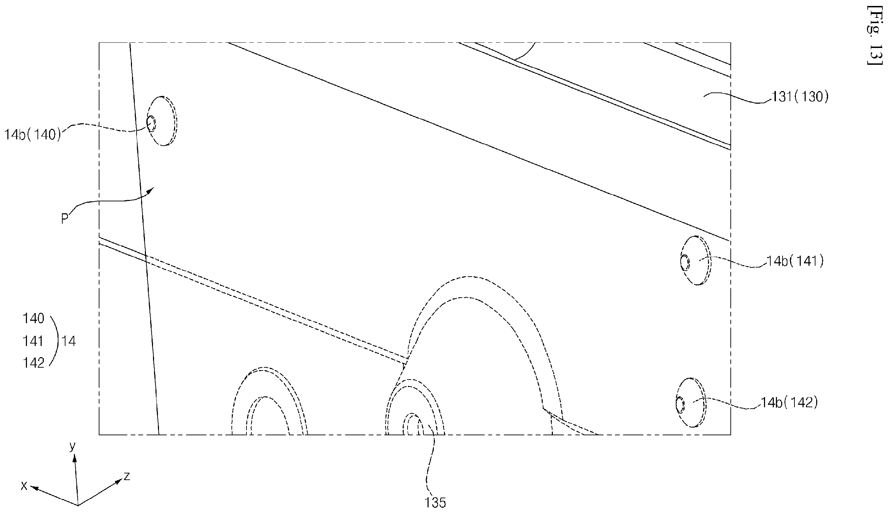

Referring to FIG. 13, the board P may be positioned at the rear of the frame 130, and may be mounted on the fixed portion 135. The board P may include a Printed Circuit Board (PCB), and may be referred to as an electronic component P. For example, the board P may be a power supply board, a timing controller board, an LED driver, or a main board.

The rear end of the holder 14 made of insulating material may come into contact with the front side of the board P mounted on the fixed portion 135. Accordingly, the holder 14 may separate the board P from the frame 130, and prevent the electricity of the board P from flowing to the frame 130.

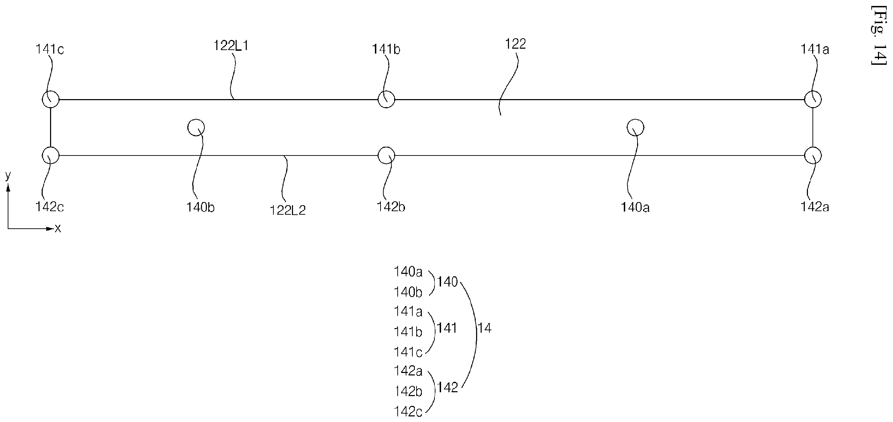

Referring to FIG. 14, a plurality of holders 14 may be spaced apart from each other. The holders 14 may be spaced apart from each other in the longitudinal direction of the bar-type substrate 122. The holders 14 may be spaced apart from each other in the width direction of the bar-type substrate 122.

The inner holders 140 may be spaced apart from each other in the longitudinal direction of the substrate 122. A first inner holder 140a may be coupled to the central portion of the substrate 122 while being adjacent to one end of the substrate 122. A second inner holder 140b may be coupled to the central portion of the substrate 122 while being adjacent to the other end of the substrate 122.

The first side holders 141 may be spaced apart from each other along the first long side 122L1 of the substrate 122. The first side holder 141a may be coupled to the first long side 122L1 while being adjacent to one end of the substrate 122. The first side holder 141b may be positioned between one end and the other end of the substrate 122, and may be coupled to the first long side 122L1. The first side holder 141c may be coupled to the first long side 122L1 while being adjacent to the other end of the substrate 122.

The second side holders 142 may be spaced apart from each other along the second long side 122L2 of the substrate 122. The second side holder 142a may be coupled to the second long side 122L2 while being adjacent to one end of the substrate 1220. The second side holder 142b may be positioned between one end and the other end of the substrate 122, and may be coupled to the second long side 122L2. The second side holder 142c0 may be coupled to the second long side 122L2 while being adjacent to the other end of the substrate 122.

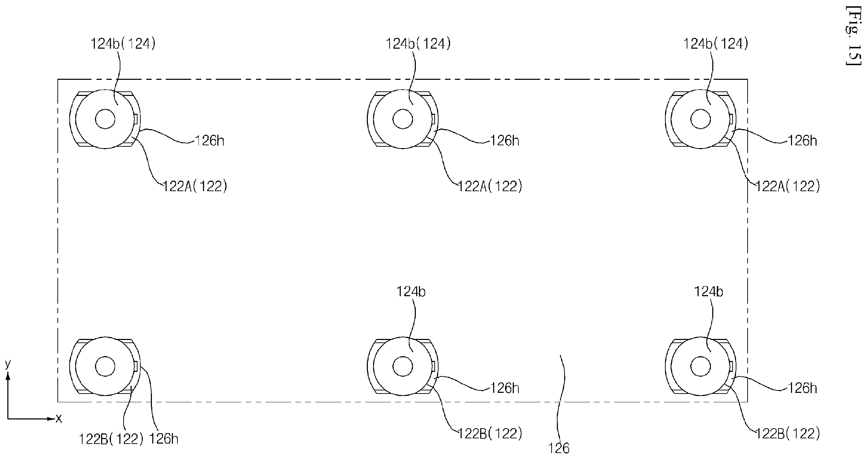

Referring to FIG. 15, the reflective sheet 126 may cover the substrate 122, and may have holes 126h where the optical assemblies 124 are positioned. In the front-rear direction, a portion of the boundary of the hole 126h may overlap with the lens 124b of the optical assembly 124. That is, a portion of the reflective sheet 126 forming the boundary of the hole 126h may be engaged with the rear surface of the lens 124b. Accordingly, the reflective sheet 126 may be coupled to the optical assemblies 124.

For example, the reflective sheet 126 may cover the heads 14a (see FIG. 7 to 9) of the holders 14 coupled to the substrate 122. Alternatively, the reflective sheet 126 may have holes where the heads 14a are positioned. Furthermore, the boundary of the holes of the reflective sheet 126 may be sandwiched between the heads 14a and the substrate 122.

As another example, the reflective sheet 126 may have holes through which the towers 14d of the holders 14 coupled to the substrate 122 pass.

Referring to FIGS. 1 to 15, the display device may include: a display panel; a frame positioned at a rear of the display panel; a substrate positioned on a front surface of the frame; light sources mounted on a front surface of the substrate; and a holder coupling the substrate to the frame, wherein the holder may include: a head positioned on the front surface of the substrate; a leg which protrudes from a rear surface of the head, and which passes through the substrate and the frame; and a protrusion which protrudes from a side surface of the leg, and which is in contact with a rear surface of the frame.

A distance between the head and the protrusion may be equal to or greater than a sum of a thickness of the substrate and a thickness of the frame.

The protrusion may extend along the side surface of the leg, and may be engaged with the rear surface of the frame.

The holder may have elasticity, and a width of the protrusion may be greater than a width of a hole in the frame through which the leg passes.

The leg may pass through an inner hole of the substrate formed between both sides of the substrate opposite to each other, and a width of the inner hole may be equal to or greater than the width of the leg and smaller than the width of the protrusion.

The leg may penetrate a side hole of the substrate formed on one side of the substrate, and the side hole may be a groove formed from the one side of the substrate toward an inner side of the substrate.

The substrate may be elongated, and the holder may include a plurality of holders spaced apart from each other in a longitudinal direction of the substrate or in a width direction of the substrate.

The plurality of holders may include inner holders which are positioned between long sides of the substrate opposite to each other, and which are spaced apart from each other in the longitudinal direction of the substrate.

The plurality of holders may include: a first side holder positioned on a first long side of the substrate; and a second side holder positioned on a second long side of the substrate opposite to the first long side.

The display device may further include a diffusion plate positioned between the display panel and the substrate, and the holder may further include a tower which protrudes from the head toward the diffusion plate, and which supports a rear surface of the diffusion plate.

The head of the holder may be white.

The display device may further include lenses which cover the light sources, and are mounted on the front surface of the substrate; and a reflective sheet which covers the substrate, and which includes holes in which the lenses are positioned, and the reflective sheet covers the head of the holder.

The display device may further include a board mounted on the rear surface of the frame, and the holder may include an insulating material, and a rear end of the holder may be in contact with a front surface of the board.

Certain embodiments or other embodiments of the invention described above are not mutually exclusive or distinct from each other. Any or all elements of the embodiments of the invention described above may be combined or combined with each other in configuration or function.

For example, a configuration "A" described in one embodiment of the invention and the drawings and a configuration "B" described in another embodiment of the invention and the drawings may be combined with each other. Namely, although the combination between the configurations is not directly described, the combination is possible except in the case where it is described that the combination is impossible.

The above detailed description should not be construed as restrictive in all respects and should be considered as illustrative. The scope of the present disclosure should be determined by a reasonable interpretation of the appended claims, and all modifications within the equivalent scope of the present disclosure are included in the scope of the present disclosure.

## Claims

1. A display device comprising:
a display panel;
a frame positioned at a rear of the display panel;
a substrate positioned on a front surface of the frame;
light sources mounted on a front surface of the substrate; and
a holder coupling the substrate to the frame,
wherein the holder comprises:
a head positioned on the front surface of the substrate;
a leg which protrudes from a rear surface of the head, and which passes through the substrate and the frame; and
a protrusion which protrudes from a side surface of the leg, and which is in contact with a rear surface of the frame.

2. The display device of claim 1, wherein a distance between the head and the protrusion is equal to or greater than a sum of a thickness of the substrate and a thickness of the frame.

3. The display device of claim 1, wherein the protrusion extends along the side surface of the leg, and is engaged with the rear surface of the frame.

4. The display device of claim 1, wherein the holder has elasticity, and
wherein a width of the protrusion is greater than a width of a hole in the frame through which the leg passes.

5. The display device of claim 4, wherein the leg passes through an inner hole of the substrate formed between both sides of the substrate opposite to each other, and
wherein a width of the inner hole is equal to or greater than the width of the leg and smaller than the width of the protrusion.

6. The display device of claim 4, wherein the leg penetrates a side hole of the substrate formed on one side of the substrate, and
wherein the side hole is a groove formed from the one side of the substrate toward an inner side of the substrate.

7. The display device of claim 1, wherein the substrate is elongated, and
wherein the holder comprises a plurality of holders spaced apart from each other in a longitudinal direction of the substrate or in a width direction of the substrate.

8. The display device of claim 7, wherein the plurality of holders comprise inner holders which are positioned between long sides of the substrate opposite to each other, and which are spaced apart from each other in the longitudinal direction of the substrate.

9. The display device of claim 7, wherein the plurality of holders comprise:
a first side holder positioned on a first long side of the substrate; and
a second side holder positioned on a second long side of the substrate opposite to the first long side.

10. The display device of claim 1, further comprising a diffusion plate positioned between the display panel and the substrate, and
wherein the holder further comprises a tower which protrudes from the head toward the diffusion plate, and which supports a rear surface of the diffusion plate.

11. The display device of claim 1, wherein the head of the holder is white.

12. The display device of claim 1, further comprising:
lenses which cover the light sources, and which are mounted on the front surface of the substrate; and
a reflective sheet which covers the substrate, and which includes holes in which the lenses are positioned, wherein the reflective sheet covers the head of the holder.

13. The display device of claim 1, further comprising a board mounted on the rear surface of the frame, and
wherein the holder comprises an insulating material, and
wherein a rear end of the holder is in contact with a front surface of the board.
